# EUROPEAN PATENT APPLICATION

(11) **EP 3 760 814 A1**
(43) Date of publication of application: **06.01.2021**
(21) Application number: 19757256.3
(22) Date of filing: 20.02.2019
(51) Int. Cl.: E04G 21/04, B65G 53/32

(54) **PLUG FOR CONCRETE TRANSPORT TUBE**

(30) Priority: 26.02.2018 JP 2018031598
(71) Applicant: Deguchi, Shinpei, Kasukabe-shi, Saitama 334-0032 (JP); Deguchi, Yuki, Kasukabe-shi, Saitama 334-0032 (JP)
(72) Inventor: DEGUCHI Hideo, Kasukabe-shi Saitama 344-0032 (JP)
(74) Representative: Hofstetter, Schurack & Partner
(86) International application number: PCT/JP2019/006218
(87) International publication number: WO 2019/163801

(57) **Abstract**

[Object] It is an object of the present invention to provide a predetermined instrument which eliminates the need of a leading mortar when a pumping operation of concreate by a concrete conveying pipe is started.

[Solving Means]The present invention is configured as a plug (10) which is put into a concrete conveying pipe (6) before the pumping operation of concreate is started. If the plug (10) is put into the concrete conveying pipe before the pumping operation of the concreate is started, the plug (10) is elastically deformed, and the plug (10) comes into liquid-tight intimate contact with an inner peripheral surface of the concrete conveying pipe (6) under predetermined pressure. If the pumping operation of the concreate (22) is started by a concreate pump, the plug (10) is pushed out by a tip end of the pumped concreate (22), the plug (10) slidably moves forward in the concrete conveying pipe (6). According to this, the tip end of the concreate (22) is not exposed to air, and aggregates (24) in the concreate (22) stay in a plug flow region. The concrete conveying pipe (6) is prevented from being closed.

## Description

### [TECHNICAL FIELD]

The present invention relates to a predetermined instrument which is put into a concrete conveying pipe provided in a concrete pumping vehicle or put into a concrete conveying pipe provided in a concrete placing site. More specifically, the invention relates to an instrument which eliminates the need of a leading mortar and a predecessor agent which is conventionally thrown before a pumping operation (pressure-feeding operation) of concreate is started.

### [BACKGROUND TECHNIQUE]

Concreate is produced from cement, grave l, aggregate and the like in a batcher plant, and is loaded in a concrete mixer vehicle and conveyed to a construction site. A concrete pumping vehicle is kept on standby in a construction site, and concrete which is unloaded from the concrete mixer vehicle is pumped to a desired placing location by the concrete pumping vehicle. As is conventionally known, the concrete pumping vehicle includes a self-propelled car, devices provided in this car, i.e., a hopper into which concreate is thrown, a concreate pump, a multi-stage boom, and a concrete conveying pipe supported by this boom. The hopper is provided behind a chassis of the car, and concreate which is unloaded from the concrete mixer vehicle is thrown. The concreate pump is provided on the chassis, and is composed of a pair of piston pumps or squeeze pumps placed in parallel for example. Therefore, if the pair of piston pumps are alternately driven, concreate from the hopper can be pumped pulsatively. The multi-stage boom is composed of a plurality of mutually connected booms, and an end of one boom is connected to the chassis of the car. Connections of these booms are joints, and the connections are bent and extended by hydraulic piston cylinder units provided on the joints. Therefore, if the piston cylinder unit of each of the joints is driven, a tip end of the multi-stage boom can be moved to an arbitrary position. The concrete conveying pipe is composed of a plurality of mutually connected metal unit pipes, and the concrete conveying pipe is supported by stays provided at a plurality of locations of the multi-stage boom. One end of the concrete conveying pipe is connected to the concreate pump, and the other end of the concrete conveying pipe is supported to the tip end of the multi-stage boom. A rubber delivery hose having a predetermined length is connected to the other end. The concrete pumping vehicle is configured as described above. Therefore, if concreate is thrown to the hopper and the multi-stage boom is driven and the tip end of the del ivery hose is located at a placing place of the concreate and the concreate pump is driven, the concreate is pumped through the concrete conveying pipe and the concreate is suppl ied to the placing place from the delivery hose.

Material other than concreate can be put into the concrete conveying pipe if necessary. For example, although it is not directly related to the present invention, a cleaning instrument which is put into a concrete conveying pipe after concreate is pumped is known. After the pumping operation of concreate is completed, if the concrete conveying pipe is left as it is, concreate which remains in the pipe is solidified. Hence, after the pumping operation of concreate is completed, a sponge ball made of elastomer or a predetermined cleaning body is put into the concrete conveying pipe and then, compressed air or water is supplied. According to this, the sponge ball or the cleaning body is pushed out forward in the concrete conveying pipe by the compressed air or water, and concreate which attaches in the concrete conveying pipe can be removed. An opening which can open and close is formed in a portion of the concrete conveying pipe provided in the concrete pumping vehicle as described in patent document 1 for example. The sponge ball and the like can temporality open this opening and can be put into the concrete conveying pipe.

### [PRIOR ART DOCUMENT]

### [PATENT DOCUMENT]

### [Patent Document 1]

Japanese Translation of PCT International Application, Publication No.H9-512321

As a material which is put into the concrete conveying pipe, leading mortar which is put into the pipe before the pumping operation of concreate is started is known. Since concreate includes aggregate as described above, when the concreate is pumped through the concrete conveying pipe, the aggregate is accumulated in the pipe and the concrete conveying pipe is easily closed. Most of such closing phenomenon is generated when the pumping operation of concreate is started, and the closing phenomenon is not generated almost at all in a state where concreate is steadily pumped. To prevent the concrete conveying pipe from being closed when the pumping operation of concreate is started, a predetermined amount of leading mortar is supplied to the concrete conveying pipe by the concreate pump before concreate is pumped. Concreate is supplied following the leading mortar. Since the leading mortar is made of only cement, water and sand, flow property of the leading mortar is high, and even if concreate is pumped thereafter, the pipe is not closed.

The concrete conveying pipe is prevented from being closed by the leading mortar which is thrown before concreate. It is conventionally considered that the pipe is prevented from being closed due to the following two reasons. The first reason is that lubrication in the pipe is secured. The inside of the concrete conveying pipe is coated by a layer of the leading mortar, and concreate which is pumped thereafter is smoothly sent. The second reason is that loss of mortar in the respective connections of the plurality of unit pipes which configure the concrete conveying pipe is prevented. Slight gaps are formed between the connections of the unit pipes, and mortar included in concreate is taken away in the gaps. If mortar is reduced from concreate, a ratio of aggregate is increased, flow property is deteriorated and the pipe is prone to be closed by the deterioration of the flow property. The leading mortar previously enters the gaps of the connections, and this prevents mortar from being lost from the concreate.

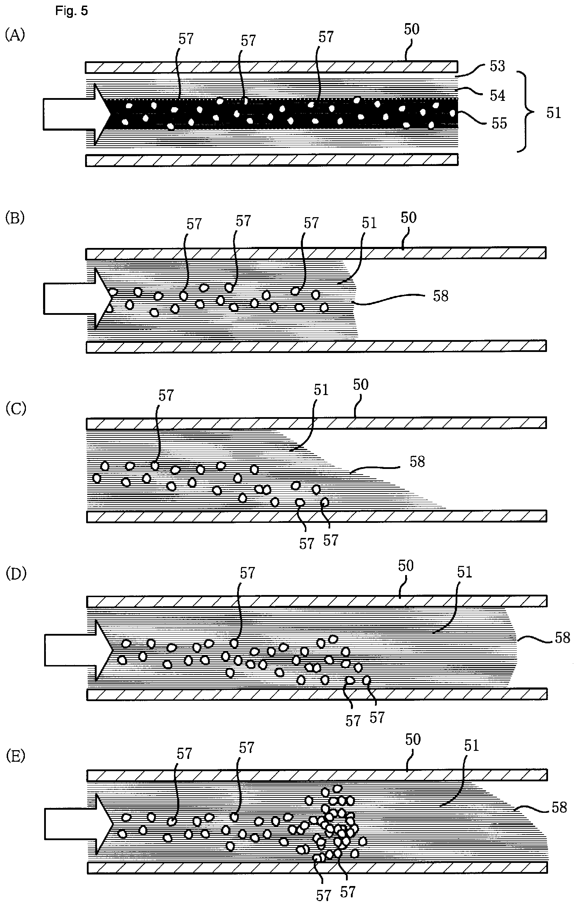

The present inventor researched a mechanism in which the close in the concrete conveying pipe is generated, and found behavior which was not conventionally known. According to this, the inventor found other factor which prevents the concrete conveying pipe from being closed by the leading mortar. This factor will be described below. If concreate 51 is pumped in a concrete conveying pipe 50 and predetermined time is elapsed, that is, if the concrete conveying pipe 50 is brought into a steady state, a laminar flow state is created as shown in Fig. 5(A). That is, a thin layer having high flow property, i.e., a fluid bed 53 is formed on a portion which is in contact with an inner wall of the concrete conveying pipe 50. It is considered that the fluid bed 53 is mainly made of cement and water. A shear flow region 54 having a predetermined thickness on which a shearing force generated when concreate flows largely acts is formed inside the fluid bed 53, and a plug flow region 55 having a predetermined diameter is formed inside the shear flow region 54, i.e., from a center axis of the concrete conveying pipe 50. Aggregates 57, 57 ... in the concreate 51 flow mainly in the plug flow region 55. That is, the aggregates flow in the vicinity of the center axis of the concreate 51 in the steady state. The present inventor found the following behavior. The concreate 51 is supplied to the concrete conveying pipe 50 without supplying leading mortar. Conveyance of the concreate 51 is started by a concreate pump which is composed of two piston pumps (not shown). When the concreate 51 is pushed out by the first piston, the aggregates 57, 57 ... are concentrated in the vicinity of the center axis, i.e., on the plug flow region as shown in Fig. 5(B). At that time, an end surface of a tip end of the concreate 51, i.e., an interface 58 which is in contact with air is substantively perpendicular to an axis of the concrete conveying pipe 50. If the first piston is stopped and the piston is switched to the second piston, flow of the concreate 51 temporarily stops as shown in Fig. 5(C). According to this, component in the concreate 51 having high flow property in the vicinity of the tip end of the concreate 51, i.e., mortar flows by the gravity force, and the interface 58 spreads laterally. That is, the interface 58 inclines. At that time, the aggregates 57, 57 ... sink downward in the vicinity of the tip end, and the aggregates 57, 57 ... approach the inner wall of the concrete conveying pipe 50. If the concreate 51 is again pushed out by the second piston as shown in Fig. 5(D), the concreate 51 is pushed out by a predetermined amount, but since the aggregates 57, 57 ... in the vicinity of the inner wall of the concrete conveying pipe 50 are in the shear flow region, the flowing speed is small and the concreate 51 is not pushed out sufficiently. That is, the aggregates 57, 57 are slightly delayed. Aggregates 57, 57 ... in the concreate 51 which ride on the plug flow region from behind and which are sent catch up with the former aggregates 57, 57 ... which are slightly delayed in this manner. According to this, a region where density of the aggregates 57, 57 ... becomes high is formed. If the switching operation and the driving operation of the pistons are repeated, density of the aggregates 57, 57 ... becomes higher and higher in such a region, and the closed state is generated by the aggregates 57, 57 ... in the course of time as shown in Fig. 5(E). According to observation of the present inventor, even if the closed state was generated in the concrete conveying pipe 50, a state where the aggregates 57, 57 ... gathered in the vicinity of the center axis of the concrete conveying pipe 50 was maintained behind the concrete conveying pipe 50. The inventor considers that the closed state can be prevented by the leading mortar because the leading mortar exists at the tip end, a state where the concreate 51 is in contact with air is eliminated, aggregates 57, 57 ... in the vicinity of the tip end drop, and it is possible to prevent the aggregates 57, 57 ... from approaching the inner wall of the concrete conveying pipe 50.

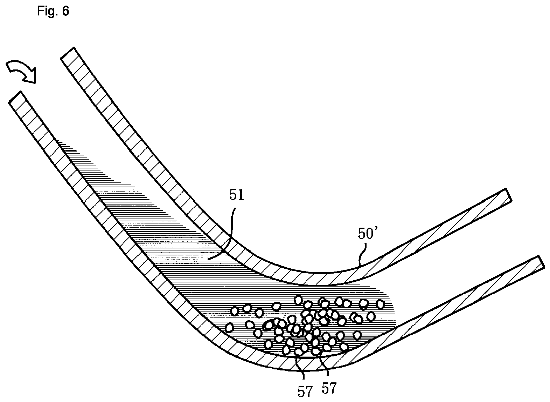

The present inventor also found a mechanism in which the closed state is generated in a concrete conveying pipe 50' having a downward inclination when the pumping operation of the concreate 51 is started. Fig. 6 shows the concrete conveying pipe 50' having the downward inclination and which curves upward from a predetermined position. A tip end area of the concreate 51 which is pumped drops down by the gravity force. When the tip end area of the concreate 51 drops down, the dropping motion of the mortar having viscosity is delayed, but the aggregates 57, 57 ... drop antecedently. According to this, the aggregates 57, 57 ... gather densely at a lowermost portion. According to this, the closed state is generated. If the leading mortar is pumped earlier than the concreate 51, the closed state in the concrete conveying pipe 50' having the downward inclination can be prevented. It is considered that this is because since the concrete conveying pipe 50' having the downward inclination is already filled with the leading mortar, the aggregates 57, 57 ... drop down and do not gather densely at the lowermost portion.

### [SUMMARY OF THE INVENTION]

### [PROBLEM TO BE SOLVED BY THE INVENTION]

When the pumping operation of the concreate is started by the concrete conveying pipe, if a predetermined amount of leading mortar is used as in the conventional manner, it is possible to prevent the concrete conveying pipe from being closed. However, since concrete placing work of the leading mortar cannot be carried out in a concrete placing site, the leading mortar must be discarded. This is waste of resources and it involves a cost. Therefore, it is an object of the present invention to provide a predetermined instrument which does not require leading mortar before the pumping operation of concreate is started, which can avoid waste of resources and which only requires small cost. A predecessor agent is known as a material which is put into a concrete conveying pipe before the pumping operation of concreate is started to prevent the pipe from being closed, but the predetermined instrument of the present invention exerts the same effect as that of the leading mortar. Therefore, the predetermined instrument which is the object of the present invention also eliminates the need of the predecessor agent.

### [MEANS FOR SOLVING THE PROBLEM]

To achieve the above object, the present invention is configured as a plug which is put into a concrete conveying pipe before a pumping operation of concreate is started. If the plug is put into the concrete conveying pipe before the pumping operation of the concreate is started, the plug is elastically deformed and the plug comes into liquid-tight intimate contact with an inner peripheral surface of the concrete conveying pipe under predetermined pressure. If the pumping operation of the concreate is started by a concreate pump, the plug is pushed out by a tip end of the pumped concreate, and the plug slidably moves forward in the concrete conveying pipe. The tip end of the pumped concreate is not exposed to air because the plug exists, and aggregate in the concreate stay in a plug flow region. That is, the concrete conveying pipe is prevented from being closed.

That is, to achieve the object of the present invention, claim 1 provides a plug for a concrete conveying pipe which is put into the same, wherein the plug is put into the concrete conveying pipe before a pumping operation of concreate is started, the plug is elastically deformed and comes into liquid-tight intimate contact with an inner peripheral surface of the concrete conveying pipe under predetermined pressure, and if the pumping operation of the concreate is started by a concreate pump, the plug is pushed by a tip end of the concreate, and the plug slidably moves forward in the concrete conveying pipe.

According to the invention described in claim 2, in the plug for the concrete conveying pipe of claim 1, the plug is made of elastic material and formed into a spherical shape.
According to the invention described in claim 3, in the plug for the concrete conveying pipe of claim 1, the plug is made as an elastic body having a sealed chamber whose outer diameter is smaller than an inner diameter of the concrete conveying pipe, the sealed chamber is filled with fluid such as air, and if the sealed chamber is filled with fluid in a state where the plug is put into the concrete conveying pipe, the plug is expanded and its outer peripheral surface comes into intimate contact with the inner peripheral surface of the concrete conveying pipe under predetermined pressure.

According to the invention described in claim 4, in the plug for the concrete conveying pipe of any one of claims 1 to 3, the plug is provided with a transmitter, and a signal from the transmitter is detected by a predetermined receiver, thereby detecting a position of the plug in the concrete conveying pipe.

### [EFFECT OF THE INVENTION]

As described above, the present invention is configured as the plug which is put into the concrete conveying pipe. This plug is put into the concrete conveying pipe before the pumping operation of the concreate is started, the plug is elastically deformed and it comes into liquid-tight intimate contact with an inner peripheral surface of the concrete conveying pipe under predetermined pressure. If the pumping operation of the concreate is started by the concreate pump, the plug is pushed by the tip end of the concreate, and the plug slidably moves forward in the concrete conveying pipe. That is, the plug of the present invention moves forward in the concrete conveying pipe in a state where the plug is in intimate contact with the concreate in the tip end of the concreate whose pumping operation is started. According to this, it is unnecessary that the tip end of the pumped concreate becomes an opening end which is in contact with air. Further, constant pressure of the tip end is held and uniformed density is maintained. According to this, even if the pumping operation, the stopping operation and the pumping operation are repeated by the concreate pump which is composed two piston pumps, aggregates do not separate and gather densely in the vicinity of the tip end of the concreate. That is, it is possible to prevent the concrete conveying pipe from being closed. Further, even in the concrete conveying pipe having the downward inclination, aggregates do not first drop from the tip end of the pumped concreate, and it is possible to prevent the concrete conveying pipe from being closed by the aggregates. That is, as the plug of the present invention, it is unnecessary to use expensive leading mortar which was conventionally required to prevent the concrete conveying pipe from being closed. According to another aspect of the invention, the plug is made of elastic material and formed into a spherical shape. Since the shape is simple, it is possible to produce the plug relatively inexpensively. According to another aspect of the invention, the plug is made as an elastic body having a sealed chamber whose outer diameter is smaller than an inner diameter of the concrete conveying pipe, the sealed chamber is filled with fluid such as air, and if the sealed chamber is filled with fluid in a state where the plug is put into the concrete conveying pipe, the plug is expanded and its outer peripheral surface comes into intimate contact with the inner peripheral surface of the concrete conveying pipe under predetermined pressure. Since this plug is smaller than the inner diameter of the concrete conveying pipe, the plug can easily be put into the concrete conveying pipe, and it is possible to adjust intimate contact pressure of the inner peripheral surface of the concrete conveying pipe with the outer peripheral surface of the plug by adjusting an amount of fluid to be charged or pressure. That is, an effect that handling becomes easy can be obtained. Further, according to another aspect of the invention, the plug is provided with a transmitter, and a signal from the transmitter is detected by a predetermined receiver, thereby detecting a position of the plug in the concrete conveying pipe. According to this aspect, since it is possible to easily detect the position of the plug even if the concrete conveying pipe is long, it is possible to grasp to which location the concreate is pumped, and efficiency of the placing operation of concreate is enhanced.

### [BRIEF DESCRIPTION OF THE DRAWINGS]

Fig. 1 is a schematic perspective view of a conventional concrete pumping vehicle to which a plug for a concrete conveying pipe of embodiments of the present invention is applied;
Figs. 2(A) and (B) are perspective views of plugs for the concrete conveying pipe according to first and second embodiments of the invention, and Figs. 2(C) and (D) are front sectional views of plugs for the concrete conveying pipe according to third and fourth embodiments of the invention;
Figs. 3 are explanatory diagrams of steps when a pumping operation of concreate is started using the plug for the concrete conveying pipe according to the first embodiment of the invention, wherein Figs. 3(A) to (C) are front sectional views of the concrete conveying pipe and the plug in the steps;
Figs. 4 are explanatory diagrams of steps when the pumping operation of concreate is started using the plug for the concrete conveying pipe according to the third embodiment of the invention, wherein Figs. 4(A) to (C) are front sectional views of the concrete conveying pipe and the plug in the steps;
Figs. 5(A) to (E) are front sectional views of the concrete conveying pipe which schematically show a state of pumped concreate; and
Fig. 6 is a front sectional view of a concrete conveying pipe having downward inclination which schematically shows a state of pumped concreate.

### [MODE FOR CARRYING OUT THE INVENTION]

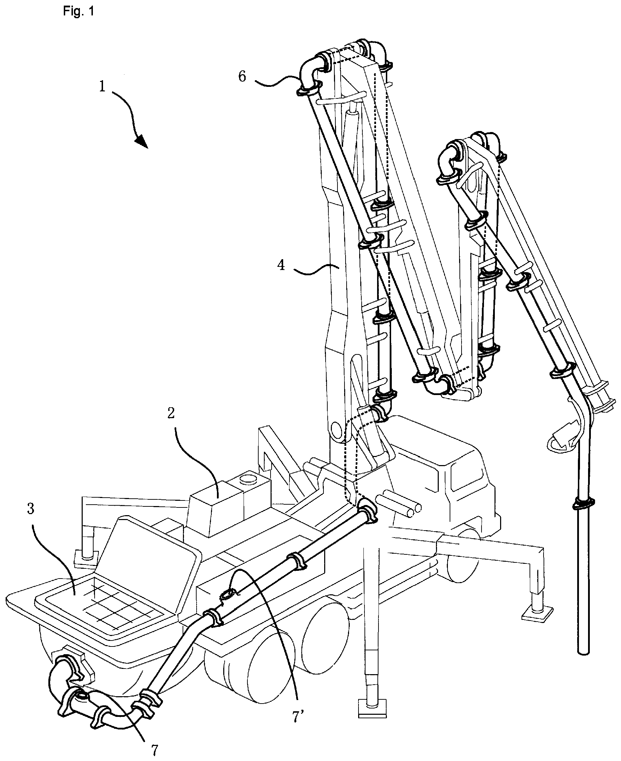

Embodiments of the present invention will be described below. As shown in Fig. 1, a concrete pumping vehicle 1 which pumps concreate is composed of a car 2 which is self-propelled by an engine, a hopper 3 which is fixed to a rear portion of a chassis of the car 2 and to which concreate is thrown, a concreate pump which pumps concreate from the hopper 3, a multi-stage boom 4 having an end connected to a front portion of the car 2, and a concrete conveying pipe 6 which is supported by the multi-stage boom 4 and which bends together with the multi-stage boom 4. Although the concreate pump is not illustrated in Fig. 1, the concreate pump is composed of a pair of piston pumps. If the piston pumps are alternately driven, concreate is pumped through the concrete conveying pipe 6 pulsatively. In the embodiments, an opening 7 is provided in a portion of the concrete conveying pipe 6. A plug 10a of a first embodiment of the present invention which will be described next is put into the concrete conveying pipe 6 through the opening 7. The concrete conveying pipe 6 is composed of a plurality of unit pipes which are connected to one another in series. This opening 7 is provided in the unit pipes each having a tapered inner diameter. The opening 7 is closed with a predetermined lid. A plug 10c according to the third embodiment of the invention is put into the concrete conveying pipe 6 through an opening 7' which is shown with a dotted line. The opening 7' is provided in unit pipes having constant inner diameters. The concrete conveying pipe 6 is provided with any one of the openings 7 and 7' depending upon which one of the plugs 10a and 10c is used.

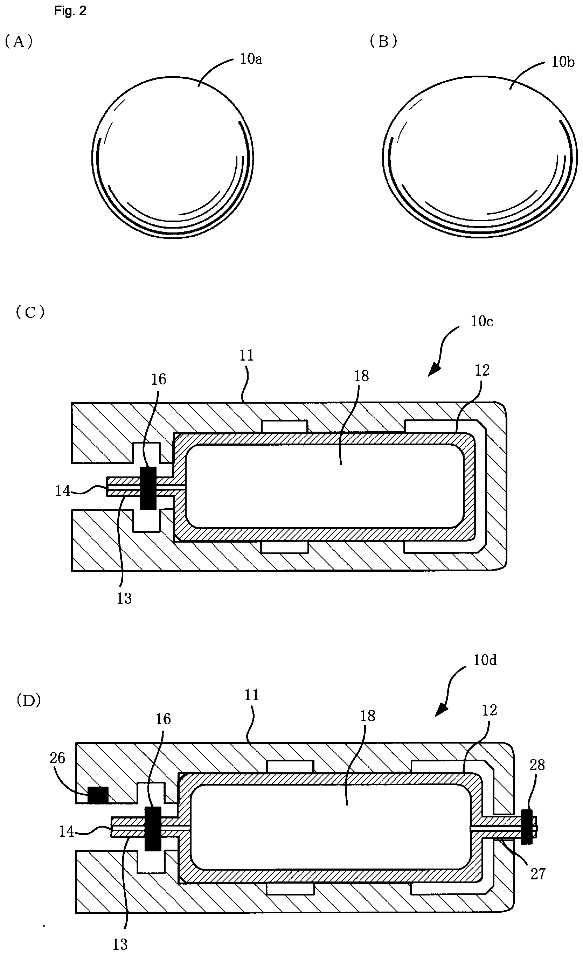

The plug 10a of the first embodiment of the present invention is made of elastic material such as natural rubber and polyurethane, and is formed into a spherical shape as shown in Fig. 2(A). A diameter of the plug 10a is slightly larger than an inner diameter of the concrete conveying pipe 6. Therefore, if the plug 10a is pushed and put into the concrete conveying pipe 6, the plug 10a is elastically deformed, and comes into liquid-tight intimate contact with an inner peripheral surface of the concrete conveying pipe 6. The plug 10a may be formed into a hollow shape or the hollow may not exist. Alternatively, the plug may be provided at its center with a metal core such as wood and metal.

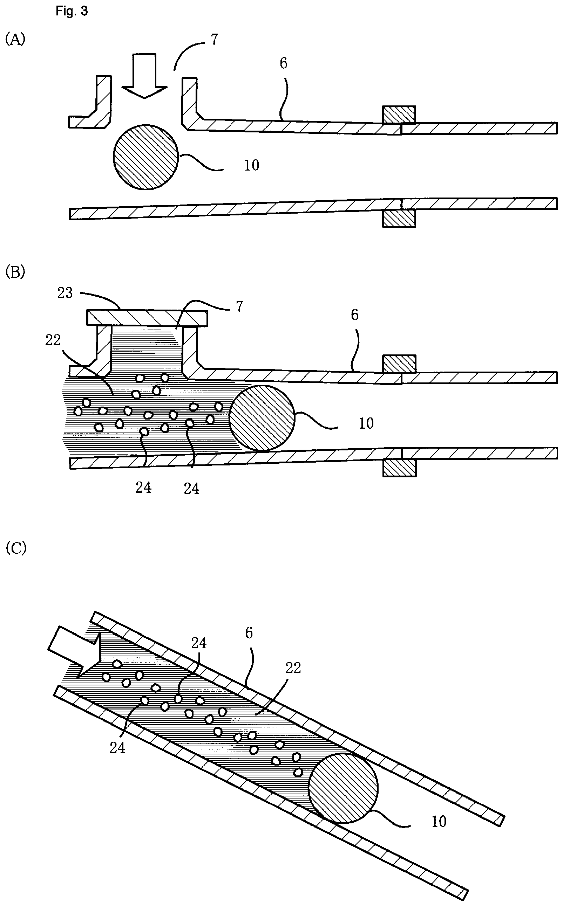

A method of starting a pumping operation of concreate using the plug 10a of the first embodiment of the invention will be described. Here, leading mortar is not used. In the concrete conveying pipe 6 of the concrete pumping vehicle 1, the opening 7 is opened as shown in Fig. 3(A). The plug 10a of this embodiment is inserted into the concrete conveying pipe 6 from the opening 7. As shown in Fig. 3(A), the inner diameter of each of the unit pipes in which the opening 7 is provided is large on its upstream side, and the inner diameter gradually becomes smaller toward its downstream, and the unit pipe is connected to the next unit pipe. Since the opening 7 is formed in the large inner diameter portion, the plug 10a can easily be inserted into the pipe.

The concreate pump of the concrete pumping vehicle 1 is driven and the pumping operation of concreate 22 is started. As the pumping operation of the concreate 22 is started, air which is pushed out by the concreate 22 in the concrete conveying pipe 6 is discharged outside from the opening 7. If the tip end of the pumped concreate 22 reaches the plug 10a, i.e., if air between the concreate 22 and the plug 10a is lost, the concreate pump is once stopped, and the opening 7 is closed with the lid 23 as shown in Fig. 3(B). After the opening 7 is closed, the driving operation of the concreate pump is resumed and the concreate 22 is pumped. The plug 10a is pushed by the tip end of the concreate 22 and is moved forward in the tapered unit pipe. According to this, the plug 10a comes into intimate contact with the inner peripheral surface of the unit pipe, and the unit pipe is plugged. If the plug 10a is successively pushed by the concreate 22 and is moved forward, the plug 10a is elastically deformed and formed into an elliptic shape, and the plug 10a comes into liquid-tight intimate contact with the inner peripheral surface of the concrete conveying pipe 6 under predetermined pressure. Then, the plug 10a is pushed out and is moved to the next unit pipe. Elastic modulus of the plug 10a is high and it is not easily deformed. Therefore, the plug 10a cannot pushed into the concrete conveying pipe 6 by human power, and the plug 10a cannot be moved in the concrete conveying pipe 6. The plug 10a can be pushed and elastically deformed only by pushing-out pressure of the concreate 22 by the concreate pump, and the plug 10a can be moved in the pipe. In this point, the plug is different from a conventional cleaning instrument such as a sponge ball which is used for cleaning the concrete conveying pipe 6 and which is easily inserted into the concrete conveying pipe 6 and moved even by human power.

The pumping operation by the concreate pump is continued. According to this, the plug 10a is pushed by the concreate 22 with large friction resistance, and the plug 10a moves ahead in the concrete conveying pipe 6. Since the tip end of the concreate 22 is always pressed by the plug 10a, an open interface which comes into contact with air is not formed and the concreate 22 is pumped through the concrete conveying pipe 6. According to this, a laminar flow state of the concreate 22 is maintained, and it is ensured that the aggregates 24, 24 ... in the concreate 22 stay in the plug flow region. Even if a portion of the concrete conveying pipe 6 has a downward inclination as shown in Fig. 3(C), since the plug 10a exists on the tip end of the concreate 22, only the aggregates 24, 24 ... does not first drop from the concreate 22, and the aggregates 24, 24 ... stay in the plug flow region. Since the aggregates 24, 24 ... stay in the plug flow region and the concreate 22 is pumped as described above, density of the aggregates 24, 24 ... is not increase in a portion of the concreate 22, and the concrete conveying pipe 6 is prevented from being closed. The plug 10a is pushed out and comes out from the tip end of the concrete conveying pipe 6 in the course of time. Subsequently, the concreate pump is driven and the concreate 22 is pumped. Since the pumped concreate 22 does not include leading mortar, it is possible to place the concreate 22 immediately.

The plug 10a of the first embodiment can variously be deformed. Fig. 2(B) shows a plug 10b of the second embodiment. In the second embodiment, the plug is formed into an ellipsoidal body. In the plug 10b of the second embodiment also, a diameter of a smallest diameter portion of a central portion thereof is slightly larger than the inner diameter of the concrete conveying pipe 6. Therefore, if the plug 10b is put into the concrete conveying pipe 6, its outer peripheral surface comes into liquid-tight intimate contact with the inner peripheral surface of the concrete conveying pipe 6 under predetermined pressure.

The plugs 10a and 10b of the present invention can also be deformed in different ways. Fig. 2(C) shows a plug 10c of the third embodiment of the present invention. The plug 10c of the third embodiment is composed of an outer body 11 and a bag body 12. The outer body 11 is formed into a cylindrical body having a predetermined thickness, and is made of elastic material, e.g., polyurethane. One of ends of the cylindrical body of the outer body 11 is closed. That is, the one end is bottomed. The other end is opened. An outer diameter of the outer body 11 is slightly smaller than the inner diameter of the concrete conveying pipe 6. Therefore, the plug 10c can easily be inserted into the concrete conveying pipe 6.

The bag body 12 is inserted inside of the outer body 11. The bag body 12 is also made of elastic material having airtightness or liquid tightness. For example, the bag body 12 is made of isobutylene, isoprene or styrene rubber. The bag body 12 is formed into a bag shape having a predetermined thickness, a fluid injection pipe 13 having a small diameter is formed on a portion of the bag body 12, and the fluid injection pipe 13 is placed in an opening of the outer body 11. A tip end of the fluid injection pipe 13 is formed as a fluid supply port 14, and gas or liquid, i.e., fluid can be supplied into the bag body 12. A valve 16 is provided on the fluid injection pipe 13, and fluid which is placed into the bag body 12 does not reversely flow and does not flow outside. If the bag body 12 is filled with fluid, the bag body 12 expands and the outer body 11 deforms. According to this, the outer diameter of the outer body 11 becomes large. The plug 10c can be expanded by pressure of sealed fluid. Therefore, the inside of the bag body 12 can be called a sealed chamber 18.

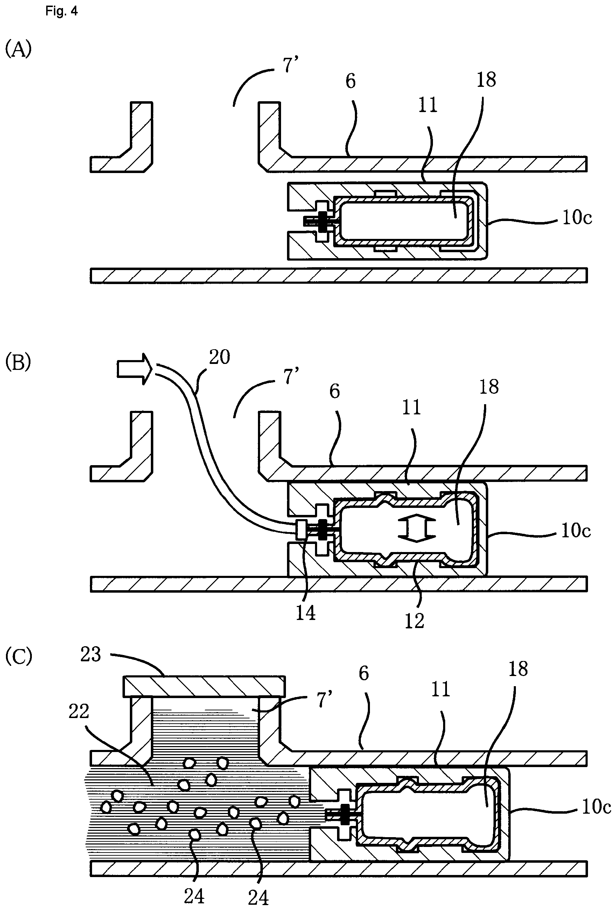

Like the plug 10a of the first embodiment, the plug 10c of the third embodiment of the present invention is also inserted into the concrete conveying pipe 6 before the concreate is pumped, but since the diameter of the outer body 11 of the plug 10c is slightly smaller than the inner diameter of the concrete conveying pipe 6, the plug 10c can easily be inserted into the concrete conveying pipe 6. Therefore, the opening 7' into which the plug 10c is inserted is provided in the unit pipe having a constant inner diameter as shown in Fig. 1. Fig. 4(A) shows a state where the opening 7' is opened and the plug 10c of the third embodiment is inserted into the concrete conveying pipe 6. A fluid supply hose 20 is inserted from the opening 7' and the fluid supply hose 20 is connected to the fluid supply port 14 of the plug 10c as shown in Fig. 4(B). Fluid is suppl ied to the sealed chamber 18. For example, water or liquid such as machine oil may be supplied, or gas such as nitrogen may be supplied, but compressed air is supplied in the third embodiment. The bag body 12 is expanded by the compressed air and the outer diameter of the outer body 11 is increased. According to this, the outer peripheral surface of the plug 10c comes into intimate contact with the inner peripheral surface of the concrete conveying pipe 6 under predetermined pressure. The fluid supply hose 20 is detached and it is evacuated from the opening 7. The concreate pump of the concrete pumping vehicle 1 is driven and the pumping operation of the concreate 22 is started. As the pumping operation of the concreate 22 is started, air which is pushed out by the concreate 22 in the concrete conveying pipe 6 is discharged outside from the opening 7'. If the tip end of the pumped concreate 22 reaches the plug 10c, i.e., if air between the concreate 22 and the plug 10c vanishes, the concreate pump is once stopped and the opening 7' is closed with the lid 23 as shown in Fig. 4(C). After the opening 7' is closed, the concreate pump is again driven and the concreate 22 is pumped.

The plugs 10a, 10b and 10c can further be deformed variously. Fig. 2(D) shows a plug 10d of the fourth embodiment in which the plug 10c of the third embodiment is deformed. The plug 10d is provided with a transmitter 26 which transmits radio waves. If such a plug 10d is used, it is possible to detect a position of the plug 10d in the concrete conveying pipe 6 by using a receiver which detects radio waves. In the plug 10d of the fourth embodiment, a fluid discharge pipe 27 projects from a front portion of the bag body 12, and the fluid discharge pipe 27 projects outward in the tip end of the plug 10d. The fluid discharge pipe 27 is provided with a discharge valve 28. If the plug 10d is configured as described above, when the plug is pushed by the pumped concreate and the plug 10d reaches a location near an outlet of the concrete conveying pipe 6, fluid in the sealed chamber 18 can easily be discharged by operating the discharge valve 28. According to this, the outer diameter of the plug 10d becomes small, and the plug 10d can safely be taken out from the concrete conveying pipe 6.

The plugs 10a, 10b, 10c and 10d of the embodiments prevent the flow of the tip end of the concreate 22 from being disturbed when the concreate 22 is pumped by the concrete conveying pipe 6 so that the concreate 22 flows smoothly. That is, it can be said that the plugs 10a, 10b, 10c and 10d rectify or smoothen the flow of the concreate 22. Therefore, the plugs can be called a rectify plug or a rectify control plug.

### [EXPLANATION OF SYMBOLS]

- 1: concrete pumping vehicle
- 2: car
- 4: multi-stage boom
- 6: concrete conveying pipe
- 7: opening
- 10: plug
- 11: outer body
- 12: bag body
- 13: fluid injection pipe
- 14: fluid supply port
- 16: valve
- 18: sealed chamber
- 22: concreate
- 24: aggregate
- 26: transmitter
- 27: fluid discharge pipe
- 28: discharge valve

## Claims

1. A plug for a concrete conveying pipe which is put into the same, wherein the plug is put into the concrete conveying pipe before a pumping operation of concreate is started, the plug is elastically deformed and comes into liquid-tight intimate contact with an inner peripheral surface of the concrete conveying pipe under predetermined pressure, and if the pumping operation of the concreate is started by a concreate pump, the plug is pushed by a tip end of the concreate, and the plug slidably moves forward in the concrete conveying pipe.

2. The plug for the concrete conveying pipe according to claim 1, wherein the plug is made of elastic material and formed into a spherical shape.

3. The plug for the concrete conveying pipe according to claim 1, wherein the plug is made as an elastic body having a sealed chamber whose outer diameter is smaller than an inner diameter of the concrete conveying pipe, the sealed chamber is filled with fluid such as air, and if the sealed chamber is filled with fluid in a state where the plug is put into the concrete conveying pipe, the plug is expanded and its outer peripheral surface comes into intimate contact with the inner peripheral surface of the concrete conveying pipe under predetermined pressure.

4. The plug for the concrete conveying pipe according to any one of claims 1 to 3, wherein the plug is provided with a transmitter, and a signal from the transmitter is detected by a predetermined receiver, thereby detecting a position of the plug in the concrete conveying pipe.
